# FASCICULE DE BREVET EUROPEEN

(11) **EP 0 515 254 B1**
(45) Date de publication et mention de la délivrance du brevet: **06.03.1996**
(21) Numéro de dépôt: 92401343.6
(22) Date de dépôt: 15.05.1992
(51) Int. Cl.: G01F 23/28

(54) **Dispositif de mesure de liquide dans un réservoir**
Flüssigkeitsstandmessvorrichtung für einen Behälter
Device for measuring liquid level in a tank

(30) Priorité: 22.05.1991 FR 9106122
(43) Date de publication de la demande: 25.11.1992
(73) Titulaire: AUTOMOBILES PEUGEOT, F-75116 Paris (FR); AUTOMOBILES CITROEN, F-92200 Neuilly sur Seine (FR)
(72) Inventeur: Lalu, Daniel, F-77240 Cesson (FR)
(74) Mandataire: Pinchon, Odile

(56) Documents cités:
- DE-A- 3 912 783
- DE-U- 9 010 566
- US-A- 4 984 449
- SOVIET PATENTS ABSTRACTS Section EI, Week 9132, 25 Septembre 1991 Derwent Publications Ltd., London, GB; Class S, AN 91-236133 & SU-A-1 592 731
- ADVANCES IN INSTRUMENTATION, vol. 43, no. 3, 1988, Pittsburgh, US, pp. 1125-1133; H. OWADA et al.: 'A two-wire ultrasonic level meter with piezoelectric polymer-film sensor'

## Description

La présente invention concerne un dispositif de mesure du niveau de liquide dans un réservoir.

On connait l'utilisation de polymères piézoélectriques dans de nombreux domaines. Ces matériaux, lorsqu'ils sont correctement polarisés sont utilisés dans un nombre important de transducteurs. La plupart de ces applications utilisent le fait qu'ils sont flexibles, légers, mécaniquement résistants et thermoformables.

Il est connu de mesurer le niveau d'un liquide dans un récipient au moyen d'un flotteur associé à un potentiomètre dont la résistance varie proportionnellement au niveau de liquide. Malheureusement, si le récipient est de forme complexe et sujet à des variations d'assiette importantes comme c'est généralement le cas pour les réservoirs de carburant de véhicules automobiles, la mesure de niveau peut, dans certaines conditions, être fortement entachée d'erreur.

Il est connu également des détecteurs de niveau de liquide tel que celui enseigné par le brevet français FR-A-2 387 439 comprenant une paire de lames de céramique piézoélectrique disposées en regard et parallèlement. Ces lames constituent avec le liquide et des éléments d'un circuit électronique, tel qu'un transistor, des résistances, un condensateur, un oscillateur ultrasonore qui ne peut osciller que lorsque le liquide est interposé entre les lames. L'inconvénient d'un tel dispositif de détection est de ne permettre de détecter que la présence du liquide et par conséquent un niveau minimum ou un niveau maximum sans toutefois permettre de déterminer de façon continue le niveau du liquide.

Il est également connu de mesurer par ultrasons le niveau d'un liquide dans un récipient au moyen d'un dispositif comprenant une cellule émettrice d'ondes ultrasonores placée dans le récipient de manière à être constamment immergée dans le liquide, et des moyens de mesure du temps de propagation d'une onde émise entre la cellule émettrice et un récepteur après réflexion à la surface du liquide.

Toutefois, la précision de la mesure du niveau d'un liquide par ultrasons au moyen de la plupart des dispositifs connus est fortement tributaire d'une connaissance exacte de la vitesse de propagation du son dans le liquide considéré. Cette vitesse dépend de la nature du liquide, de sa température, mais elle est également sujette à des dispersions dues à des variations de composition (mélanges, gaz dissous) et à un vieillissement du liquide que des capteurs permettent difficilement de prendre en compte.

Un dispositif de mesure de niveau par ultrasons qui permet de s'affranchir des variations de vitesse de propagation du son dans le milieu considéré est décrit dans le brevet FR-A-2 565 345. La solution consiste à effectuer, dans un guide d'ondes acoustiques, une mesure différentielle de temps de propagation de l'onde émise et réfléchie dans un guide d'ondes de longueur fixe déterminée d'une part, et dans un guide d'ondes de longueur dépendante du niveau du liquide d'autre part.

Cependant, la mesure devient imprécise lorsqu'il y a des variations d'assiette importantes du récipient ou bien lorsqu'il s'agit de mesurer des niveaux bas. L'imprécision peut être amplifiée dans le cas d'un récipient de forme complexe si l'on traduit la mesure de niveau en mesure de volume.

On connaît également, par le document DE-U-9 010 566, un dispositif de mesure de niveau de liquide dans un réservoir comprenant des émetteurs piézoélectriques répartis sur toute la hauteur du réservoir, excités individuellement par un signal de fréquence déterminée, un circuit électronique comportant des moyens d'exciter séquentiellement les émetteurs et des moyens de détecter les signaux reçus.

Quant au document SU-A-1 592 731, il décrit, comme le précédent document, un dispositif de mesure de niveau de liquide dans un réservoir utilisant des émetteurs excités par un signal de fréquence déterminée. Dans ce document, les émetteurs, qui ne sont pas piézoélectriques, sont excités séquentiellement.

Les dispositifs de ces deux documents comportent autant de récepteurs que d'émetteurs. Ils sont donc relativement coûteux et manquent de fiabilité.

L'invention vise donc à fournir un dispositif de mesure du niveau de liquide dans un réservoir, comportant des émetteurs piézoélectriques répartis sur toute la hauteur du réservoir et excités individuellement par un signal de fréquence déterminée, un circuit électronique comportant des moyens d'exciter séquentiellement les émetteurs et des moyens de détecter les signaux reçus, qui s'affranchisse des problèmes présentés ci-dessus et qui soit fiable tout en étant d'un coût modéré.

Dans ce but, les moyens de réception des signaux sont constitués d'un récepteur unique continu disposé en vis-à-vis des émetteurs sur toute la hauteur du réservoir et l'accès des signaux reçus aux moyens de détection est commandé par un interrupteur lui-même commandé par un générateur de signaux retardés par rapport aux signaux d'excitation d'un retard déterminé une fois pour toutes en fonction du liquide auquel est destiné le dispositif, l'interrupteur déterminant ainsi des fenêtres temporelles pendant lesquelles les signaux reçus sont détectés, et le dispositif comportant des moyens de comptage du nombre de fenêtres pendant lesquelles un signal de réception a été détecté.

Un autre but est d'éviter que la mesure puisse être influencée par des variations d'assiette importante.

Ce but est atteint par le fait que les émetteurs et le récepteur sont disposés dans des plans parallèles verticaux placés au centre du réservoir et entourés par des plans en matériau conducteur réalisant une masse.

Un autre but est de proposer un dispositif permettant d'obtenir une précision souhaitée de détermination de niveau.

Ce but est atteint par le fait que les émetteurs sont constitués chacun d'une bande d'un polymère de largeur déterminée en fonction de la précision de mesure souhaitée et disposés transversalement, ladite bande étant revêtue d'électrodes conductrices.

Selon une autre caractéristique, les émetteurs et le récepteur sont constitués par un polymère piézoélectrique fixé sur un substrat.

Selon une autre caractéristique, le substrat est de la résine époxy et la face opposée aux polymères est recouverte d'un métal conducteur réduisant les effets électromagnétiques perturbateurs.

Un autre but est de permettre une mesure précise malgré des dispersions dues à des variations de composition ou un vieillissement du liquide.

Ce but est atteint par le fait que le dispositif est relié à un circuit électronique comportant des moyens d'exciter séquentiellement les émetteurs et des moyens de détecter les signaux reçus par le récepteur pendant une fenêtre temporelle synchrone de l'émission séquentielle d'un retard dépendant de la vitesse de propagation de l'onde dans le liquide et de la distance des électrodes d'émission et de réception.

Selon une autre particularité, le dispositif comporte des moyens de comptage du nombre de fenêtres pendant lesquelles un signal de réception a été détecté.

Selon une autre particularité, les moyens d'exciter séquentiellement chacun des émetteurs sont constitués par un circuit démultiplexeur dont chacune des sorties est reliée à un émetteur et dont la sélection des sorties est commandée par un décompteur synchrone d'une horloge donnant la cadence d'excitation des émetteurs.

Selon une autre particularité, le circuit démultiplexeur est monté sur le substrat d'époxy et noyé dans une résine protectrice.

Selon une autre particularité, les moyens de comptage sont reliés à un décodeur décimal codé en binaire permettant la commande d'un affichage à sept segments.

Selon une autre particularité, le polymère piézoélectrique est un polymère de fluorure de vinylidène.

Selon une autre particularité, le polymère est un copolymère de fluorure de vinylidène.

Selon une autre particularité, le copolymère de fluorure de vinylidène est un trifluoréthylène.

Selon une autre particularité, le copolymère de fluorure de vinylidène est un tétrafluoréthylène.

Selon une autre particularité, le polymère est un mélange de polymère de fluorure de vinylidène avec un copolymère de fluorure de polyvinylidène et/ou avec un polymère de méthacrylate de méthyle.

D'autres caractéristiques et avantages de la présente invention apparaîtront plus clairement à la lecture de la description d'un mode de réalisation de l'invention illustré par les dessins annexés dans lesquels :
- la figure 1 représente une vue schématique en perspective de la disposition des émetteurs et des récepteurs suivant l'invention ;
- la figure 2 est un exemple de chronogramme des signaux émetteurs et récepteurs pour un ensemble de 4 émetteurs ;
- la figure 3 un schéma d'un circuit électronique connecté aux récepteurs et émetteurs selon l'invention.

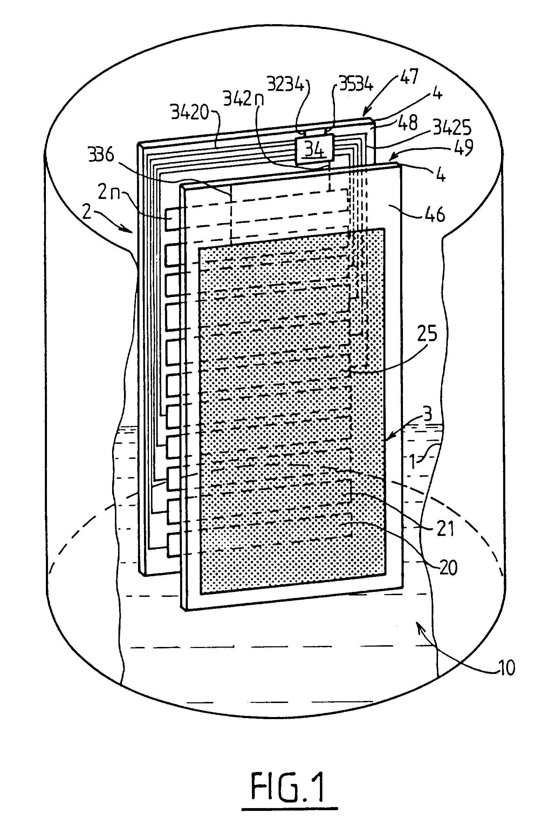

La figure 1 présente le récipient (1) contenant le liquide (10) dont le niveau ou le volume est à mesurer. Au centre de ce récipient est disposé le dispositif de mesure comprenant un ensemble d'émetteurs (2) et un récepteur (3) situés en vis-à-vis de manière à minimiser l'influence des variations d'assiette. Les émetteurs (2) et récepteur (3) sont disposés sur deux substrats (4) placés dans des plans parallèles verticaux. Sur les faces (48, 49) tournées vers l'intérieur de l'espace délimité par les deux plans (4) sont disposés, d'une part sur la face (49) le récepteur (3) et, d'autre part sur la face (48) une succession d'émetteurs formés de bandes d'un polymère piézoélectrique (20, 21, 2n) disposés transversalement à l'axe vertical du réservoir. Le polymère piézoélectrique constituant les émetteurs (20 à 2n) et le récepteur (3) est de préférence un polymère de fluorure de vinylidène. Un tel polymère est obtenu avec un taux élevé de cristallinité en phase β jusqu'à des températures relativement élevées de l'ordre de 150° C. Des couches réalisées par dépôt chimique en phase vapeur sont formées et l'orientation de sa polarisation peut être déterminée par un champ électrique convenablement appliqué. Un tel polymère peut aussi être préparé par étirage ou par les procédés classiques de fabrication de film. Sur les faces (47, 46) opposées aux faces (48, 49) se faisant en vis-à-vis, on déposera une couche de matériau conducteur férroélectrique destiné à réduire les effets magnétiques perturbateurs pour les polymères piézoélectriques. Le polymére ferroélectrique peut être constitué par un copolymère de fluorure de vinylidène, notamment le trifluoréthylène et/ou le tétrafluoréthylène. Le polymère de fluorure de vinylidène ou un ou plusieurs de ses copolymères peuvent aussi être mélangés à un autre copolymère de fluorure de polyvinylidène et/ou à un polymère de métacrylate de méthyle. Le polymère constituant les émetteurs et les récepteurs de la figure 1 a une épaisseur comprise entre 50 et 500 microns. Le film est polarisé à une valeur qui est avantageusement de l'ordre de 1 à 5 MV/cm.

Sur ces émetteurs et sur le récepteur sont disposées des électrodes de matériau conducteur de tout type connu qui adhèrent bien aux polymères et qui résistent au liquide contenu dans le récipient. Ces électrodes se prolongent sous forme de conducteurs (3420, 3425, 342n) qui relient les émetteurs respectifs (20, 25 à 2n) à un circuit démultiplexeur (34) qui est lui-même monté sur le substrat en époxy (4). Ce circuit multiplexeur (34) est monté dans une résine le protégeant du liquide dans lequel le capteur est immergé.

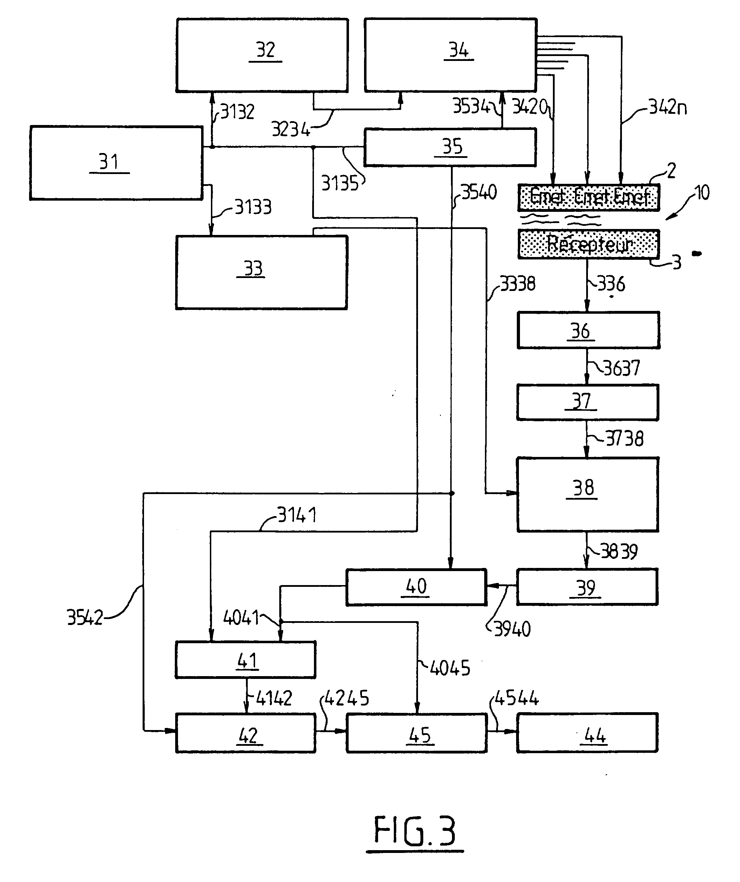

Comme on peut le voir à la figure 3, le circuit démultiplexeur (34) est relié par une liaison (3534) à un décompteur (35), par une liaison (3234) à un générateur sinusoïdal (32). De même le récepteur (3) est relié par une liaison (336) à un ampli suiveur (36). Le circuit de la figure 3 représente le schéma électronique du circuit de génération des signaux d'excitation des émetteurs et le circuit de traitement des signaux reçus par le récepteur. Ce circuit peut être, soit incorporé au niveau d'un substrat époxy à condition de le protéger du liquide par une résine adéquate, soit déporté à l'extérieur du réservoir.

De façon avantageuse, le démultiplexeur (34) sera incorporé sur le substrat (4) portant les émetteurs de façon à réduire le nombre de liaisons électriques avec le circuit électronique déporté.

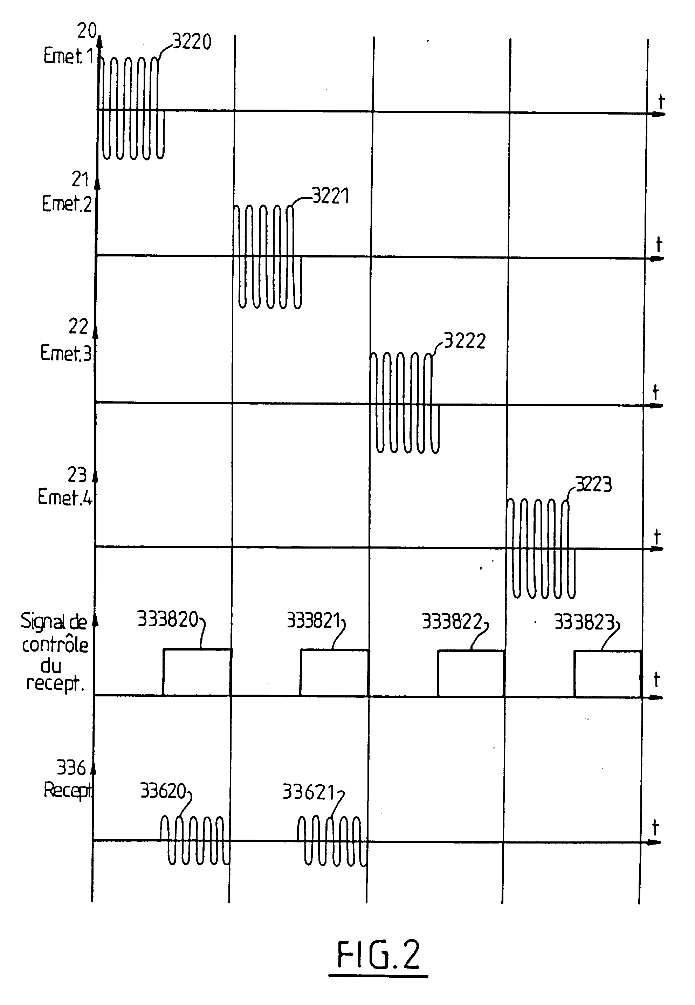

Le principe de fonctionnement du circuit électronique est explicité à la figure 2 à l'aide d'un exemple représentant le fonctionnement de quatre émetteurs (20 à 23) et les signaux reçus par le récepteur.

Selon le principe de l'invention, les émetteurs (20 à 23) sont excités séquentiellement par un signal alternatif (3220 à respectivement 3223) à une fréquence F et pendant une durée de quelques périodes. Le train d'ondes (3220 à 3223) ainsi obtenu se propage entre l'émetteur et le récepteur à une vitesse différente selon que le milieu rencontré est de l'air ou du carburant. Le temps de propagation est proportionnnel à la distance entre l'émetteur et le récepteur et inversement proportionnel à la vitesse de propagation de l'onde dans le milieu. L'électronique fait émettre successivement tous les émetteurs (20 à 2n) et observe sur le récepteur (3) après un temps correspondant à la transmission de l'onde dans le liquide dont on veut mesurer le niveau, s'il y a apparition ou non du train d'ondes émis. Pour ce faire le circuit électronique génère une fenêtre temporelle (333820 à 333823) pendant laquelle les trains d'ondes (33620 et 33621) reçus par le récepteur (3) peuvent être détectés. Le comptage du nombre de trains d'ondes reçu après l'excitation de tous les émetteurs permet de déterminer le nombre d'émetteurs immergés et par là-même le niveau du liquide.

Comme représenté à la figure 2 le circuit générateur (32) d'ondes sinusoïdales associé au démultiplexeur (34) permet de générer séquentiellement sur chaque émetteur (20 à 23) un train d'ondes respectif (3220 à 3223). Les émetteurs (20, 21) sont recouverts par le liquide et produisent sur le récepteur (3), après un temps (TR) des signaux (33620 à 33621) comportant des trains d'ondes. Ces signaux se produisant dans l'intervalle pendant lequel le circuit électronique génère une fenêtre (333820) et (333821) seront comptabilisés par le circuit électronique. Les émetteurs (22, 23) n'étant pas immergés dans le liquide, le temps de propagation de l'onde sera différent et l'onde produite dans l'air arrivera en dehors du créneau d'ouverture des fenêtres respectives (333822) et (333823). A la fin du cycle de mesure, le comptage du nombre de trains d'ondes reçus indique le nombre d'émetteurs immergés et par là-même le niveau ou le volume du liquide selon le type de positionnement retenu pour les émetteurs.

Le circuit nécessaire à l'excitation séquentielle des émetteurs et à la détection et mesure du niveau de volume représenté à la figure 3 est constitué d'un générateur impulsionnel (31) formé par une horloge commandant, par une liaison (3133), un deuxième générateur impulsionnel (33) dont le signal de sortie (3338) constitue le signal des fenêtres de sélection des signaux de réception. Une autre sortie d'horloge est envoyée par la liaison (3132) sur un générateur sinusoïdal (32) dont la sortie (3234) est envoyée sur le démultiplexeur (34). Les entrées d'adresse du démultiplexeur (34) reçoivent par la liaison (3534) les sorties du décompteur (35) dont l'entrée d'horloge reçoit par la liaison (3135) le signal d'horloge du circuit (31). Les valeurs successives du décompteur permettent de sélectionner successivement et en séquence chacun des émetteurs (20 à 2n) par chacune des liaisons (3420 à 342n). En fonction de cette sélection, le signal sinusoïdal provenant du générateur sinusoïdal (32) est envoyé pendant une durée correspondant à une impulsion d'horloge (31) pour générer un train d'ondes (3220) sur le premier émetteur (20) et ainsi de suite jusqu'à l'émetteur (2n). Chacun des trains d'ondes émis par l'un des émetteurs est reçu avec un temps de retard plus ou moins grand par le récepteur (3). Ce retard dépend de la présence ou non du liquide en vis-à-vis de l'émetteur excité. Le signal reçu, par exemple pour le premier émetteur (20) est envoyé par la liaison (336) sur un ampli suiveur (36) et par la liaison (3637) sur un filtre passe-bande et amplificateur (37). La sortie de ce filtre passe-bande (37) est envoyée dans la liaison (3738) sur un circuit (38) d'élimination des effets électromagnétiques des échos secondaires qui comprend également un interrupteur analogique commandé par le signal (3338) permettant d'ouvrir temporellement une fenêtre assurant la transmission de l'onde reçue par la liaison (3839) à un comparateur à seuil de tension (39). Lorsqu'un train d'ondes est reçu pendant la fenêtre, le comparateur (39) détecte un déplacement de seuil par le train d'ondes et commande le passage au niveau bas de la bascule. La bascule (40) est au niveau haut tant qu'aucune onde n'est détectée pendant la fenêtre temporelle. Le signal de l'horloge (31) transmis par la liaison (3141) à un circuit logique ET traverse cette porte logique ET (41) et décrémente un décompteur (42) au même rythme que s'effectue le passage de l'excitation séquentielle d'un émetteur (2n) à un émetteur (2n - 1). Ce décompteur (42) est relié par la liaison (4245) à un décodeur (45) dont la sortie (4544) commande un affichage (44). Ce décodeur (45) reçoit sur une entrée de chargement la liaison (4045) provenant de la bascule (40). Cette liaison passant au niveau bas dès la détection d'une onde pendant la fenêtre, va permettre le blocage à la dernière valeur du décompteur correspondant ainsi au nombre d'émetteurs qui n'étaient pas immergés. Ceci permet donc d'afficher le niveau du liquide étant donné que le décompteur (42) indique automatiquement le nombre d'émetteurs qui restaient à exciter et par conséquent qui se trouvaient immergés. Ce décompteur (42) reçoit, par la liaison (3542) sur son entrée de validation du chargement, un signal provenant de la sortie (3540) du décompteur (35) qui indique le passage par zéro du décompteur (35). Lorsque le décompteur (35) passe par zéro, ceci indique le balayage de tous les émetteurs et à ce moment là le décompteur (42) se retrouve chargé à sa valeur initiale (2n). De même la bascule (40) est remise à 1 par la liaison (3540) provenant du décompteur (35).

La précision de la mesure est fonction du nombre d'émetteurs. Du fait même de son principe elle est indépendante des variations de caractéristique des polymères piézoélectriques, des variations de caractéristique du liquide, de la valeur du niveau ou du volume.

L'ensemble des émetteurs est réalisé en métallisant le polymère piézoélectrique aux endroits adéquats. Dans un récipient de forme complexe, on obtient directement une indication de volume en plaçant judicieusement les émetteurs.

## Revendications

1. Dispositif de mesure du niveau de liquide dans un réservoir, comportant des émetteurs piézoélectriques (2 à 2n) répartis sur toute la hauteur du réservoir (1) et excités individuellement par un signal de fréquence déterminée, un circuit électronique comportant des moyens (31 à 35) d'exciter séquentiellement les émetteurs (20 à 2n) et des moyens de détecter les signaux reçus,
caractérisé en ce que les moyens de réception des signaux sont constitués d'un récepteur (3) unique continu disposé en vis-à-vis des émetteurs (20 à 2n) sur toute la hauteur du réservoir (1) et que l'accès des signaux reçus (336) aux moyens de détection (39 à 42) est commandé par un interrupteur (38) lui-même commandé par un générateur (33) de signaux (3338) retardés par rapport aux signaux d'excitation d'un retard déterminé une fois pour toutes en fonction du liquide auquel est destiné le dispositif, l'interrupteur (38) déterminant ainsi des fenêtres temporelles pendant lesquelles les signaux reçus (336) sont détectés, et que le dispositif comporte des moyens de comptage (42) du nombre de fenêtres pendant lesquelles un signal de réception (336) a été détecté.

2. Dispositif selon la revendication 1,
caractérisé en ce que les émetteurs (20 à 2n) et le récepteur (3) sont disposés dans des plans parallèles verticaux (4) placés au centre du réservoir (1) et entourés par des plans en matériau conducteur réalisant une masse.

3. Dispositif selon la revendication 1 ou 2,
caractérisé en ce que les émetteurs (20 à 2n) sont constitués chacun d'une bande d'un polymère de largeur déterminée en fonction de la précision de mesure souhaitée et disposés transversalement, ladite bande étant revêtue d'électrodes conductrices.

4. Dispositif selon la revendication 3,
caractérisé en ce que les émetteurs (20 à 2n) et le récepteur (3) sont constitués par un polymère piézoélectrique fixé sur un substrat (4).

5. Dispositif selon la revendication 4,
caractérisé en ce que le substrat (4) est de la résine époxy et la face opposée aux polymères est recouverte d'un métal conducteur réduisant les effets électromagnétiques perturbateurs.

6. Dispositif selon l'une des revendications 1 à 5,
caractérisé en ce que les moyens d'exciter séquentiellement chacun des emetteurs (20 à 2n) sont constitués par un circuit démultiplexeur (34) dont chacune des sorties est reliée à un émetteur (20 à 2n) et dont la sélection des sorties est commandée par un décompteur (35) synchrone d'une horloge (31) donnant la cadence d'excitation des émetteurs.

7. Dispositif selon la revendication 6,
caractérisé en ce que le circuit démultiplexeur (34) est monté sur le substrat (4) d'époxy et noyé dans une résine protectrice.

8. Dispositif selon la revendication 6,
caractérisé en ce que les moyens de comptage (42) sont reliés à un décodeur (45) décimal codé en binaire permettant la commande d'un affichage à sept segments.

9. Dispositif selon une des revendications 1 à 8,
caractérisé en ce que le polymère piézoélectrique est un polymère de fluorure de vinylidène.

10. Dispositif selon la revendication 9,
caractérisé en ce que le polymère est un copolymère de fluorure de vinylidène.

11. Dispositif selon la revendication 10,
caractérisé en ce que le copolymère de fluorure de vinylidène est un trifluoréthylène.

12. Dispositif selon la revendication 10,
caractérisé en ce que le copolymère de fluorure de vinylidène est un tétrafluoréthylène.

13. Dispositif selon la revendication 9,
caractérisé en ce que le polymère est un mélange de polymère de fluorure de vinylidène avec un copolymère de fluorure de polyvinylidène et/ou avec un polymère de méthacrylate de méthyle.

## Patentansprüche

1. Vorrichtung zur Messung des Flüssigkeitsstandes in einem Behälter, die piezoelektrische Sender (20 bis 2n) umfaßt, die über die ganze Höhe des Behälters (1) verteilt sind und einzeln von einem Signal einer bestimmten Frequenz erregt werden, eine elektronische Schaltung mit Vorrichtungen (31 bis 35) zum sequentiellen Erregen der Sender (20 bis 2n) und Vorrichtungen zum Erfassen der empfangenen Signale,
dadurch gekennzeichnet, daß die Signalempfangsvorrichtungen aus einem einzigen, durchgehenden Empfänger (3) bestehen, der über die ganze Höhe des Behälters (1) gegenüber den Sendern (20 bis 2n) angeordnet ist, und daß der Zugang der empfangenen Signale (336) zu den Erfassungsvorrichtungen (39 bis 42) von einem Schalter (38) gesteuert wird, der selbst von einem Geber (33) von Signalen (3338) gesteuert wird, die bezüglich der Erregungssignale um eine bestimmte Verzögerungszeit verzögert sind, die ein für allemal in Abhängigkeit von der Flüssigkeit, für die die Vorrichtung bestimmt ist, festgelegt ist, wodurch der Schalter (38) Zeiträume festlegt, während derer die empfangenen Signale (336) erfaßt werden, und daß die Vorrichtung Mittel (42) zum Zählen der Anzahl von Zeiträumen umfaßt, während derer ein Empfangssignal (336) festgestellt wurde.

2. Vorrichtung nach Anspruch 1, dadurch gekennzeichnet, daß die Sender (20 bis 2n) und der Empfänger (3) auf parallelen, vertikalen, in der Mitte des Behälters (1) befindlichen Ebenen (4) angeordnet sind und von Ebenen aus leitendem Material, die eine Masse darstellen, umgeben sind.

3. Vorrichtung nach Anspruch 1 oder 2, dadurch gekennzeichnet, daß die Sender (20 bis 2n) jeweils aus einem Streifen eines Polymers einer Breite bestehen, die in Abhängigkeit von der gewünschten Meßgenauigkeit bestimmt wird, und transversal angeordnet sind, wobei dieser Streifen mit leitenden Elektroden bedeckt ist.

4. Vorrichtung nach Anspruch 3, dadurch gekennzeichnet, daß die Sender (20 bis 2n) und der Empfänger (3) aus einem auf einem Substrat (4) befestigten piezoelektrischen Polymer bestehen.

5. Vorrichtung nach Anspruch 4, dadurch gekennzeichnet, daß das Substrat (4) Epoxydharz ist und die den Polymeren entgegengesetzte Seite mit einem leitenden Metall überzogen ist, das die elektromagnetischen Störeffekte verringert.

6. Vorrichtung nach einem der Ansprüche 1 bis 5, dadurch gekennzeichnet, daß die Vorrichtungen zum sequentiellen Erregen der jeweiligen Sender (20 bis 2n) aus einer Demultiplexerschaltung (34) bestehen, deren Ausgänge jeweils mit einem Sender (20 bis 2n) verbunden sind, und bei der die Auswahl der Ausgänge von einem Zwischenzähler (35) gesteuert wird, der synchron zu einem Zeitgeber (31) läuft, der den Erregungstakt der Sender vorgibt.

7. Vorrichtung nach Anspruch 6, dadurch gekennzeichnet, daß die Demultiplexerschaltung (34) auf das Epoxydsubstrat (4) montiert und in ein Schutzharz eingelassen ist.

8. Vorrichtung nach Anspruch 6, dadurch gekennzeichnet, daß die Zählvorrichtungen (42) mit einem binär kodierten Dezimaldecoder (45) verbunden sind, der die Steuerung einer Anzeige mit sieben Segmenten erlaubt.

9. Vorrichtung nach einem der Ansprüche 1 bis 8, dadurch gekennzeichnet, daß das piezoelektrische Polymer ein Vinylidenfluoridpolymer ist.

10. Vorrichtung nach Anspruch 9, dadurch gekennzeichnet, daß das Polymer ein Vinylidenfluoridkopolymer ist.

11. Vorrichtung nach Anspruch 10, dadurch gekennzeichnet, daß das Vinylidenfluoridkopolymer ein Trifluorethylen ist.

12. Vorrichtung nach Anspruch 10, dadurch gekennzeichnet, daß das Vinylidenfluoridkopolymer ein Tetrafluorethylen ist.

13. Vorrichtung nach Anspruch 9, dadurch gekennzeichnet, daß das Polymer ein Gemisch aus Vinylidenfluoridpolymer und einem Polyvinylidenfluoridkopolymer und/oder einem Methylmethacrylatpolymer ist.

## Claims

1. A device for measuring the level of liquid in a reservoir, comprising piezoelectric transmitters (2 to 2n) distributed over the whole height of the reservoir (1) and excited individually by a signal of a given frequency, an electronic circuit comprising means (31 to 35) for exciting the transmitters (20 to 2n) in sequence and means for detecting the signals received, characterised in that the means for receiving the signals are constituted by a single continuous receiver (3) disposed facing the transmitters (20 to 2n) over the whole height of the reservoir (1) and that the access of the signals received (336) to the detection means (39 to 42) is controlled by a switch which is itself controlled by a generator (33) of signals (3338) delayed in relation to the excitation signals by a delay determined once and for all as a function of the liquid for which the device is intended, the switch (38) thus determining time windows during which the signals received (336) are detected, and that the device comprises means (42) for counting the number of windows during which a reception signal (336) has been detected.

2. A device according to Claim 1,
characterised in that the transmitters (20 to 2n) and the receiver (3) are disposed in parallel vertical planes (4) placed at the centre of the reservoir (1) and surrounded by planes made of a conducting material providing an earth.

3. A device according to Claim 1 or 2,
characterised in that the transmitters (20 to 2n) are each constituted by a strip of polymer of a width determined as a function of the desired measuring accuracy and arranged transversely, said strip being covered with conducting electrodes.

4. A device according to Claim 3,
characterised in that the transmitters (20 to 2n) and the receiver (3) are constituted by a piezoelectric polymer fixed to a substrate (4).

5. A device according to Claim 4,
characterised in that the substrate (4) is made of epoxy resin and the face opposite the polymers is covered with a conducting metal reducing any disturbing electromagnetic effects.

6. A device according to one of Claims 1 to 5,
characterised in that the means for exciting each of the transmitters (20 to 2n) in sequence are constituted by a demultiplexing circuit (34), each of the outputs of which is connected to a transmitter (20 to 2n), the choice of outputs being controlled by a synchronous down-counter (35) of a clock (31) giving the excitation rate for the transmitters.

7. A device according to Claim 6,
characterised in that the demultiplexing circuit (34) is mounted on the epoxy substrate (4) and embedded in a protective resin.

8. A device according to Claim 6,
characterised in that the counting means (42) are connected to a binary coded decimal decoder (45) giving control of a seven-segment display.

9. A device according to one of Claims 1 to 8,
characterised in that the piezoelectric polymer is a vinylidene fluoride polymer.

10. A device according to Claim 9,
characterised in that the polymer is a vinylidene fluoride copolymer.

11. A device according to Claim 10,
characterised in that the vinylidene fluoride copolymer is a trifluoroethylene.

12. A device according to Claim 10,
characterised in that the vinylidene fluoride copolymer is a tetrafluoroethylene.

13. A device according to Claim 9,
characterised in that the polymer is a mixture of vinylidene fluoride polymer, with a polyvinylidene fluoride copolymer and/or with a methyl methacrylate polymer.
